# EUROPÄISCHE PATENTANMELDUNG

(11) **EP 1 482 208 A2**
(43) Veröffentlichungstag der Anmeldung: **01.12.2004**
(21) Anmeldenummer: 04008135.8
(22) Anmeldetag: 02.04.2004
(51) Int. Cl.: F16H 3/093

(54) **Dreiwellen-Getriebe**

(30) Priorität: 24.05.2003 DE 10323721
(71) Anmelder: DaimlerChrysler AG, 70567 Stuttgart (DE)
(72) Erfinder: Rüdle, Harald, 70376 Stuttgart (DE)

(57) **Zusammenfassung**

Es betrifft ein Dreiwellen-Getriebe. Es wird ein Getriebeaufbau vorgeschlagen, der ein Optimum zwischen Bauraumausnutzung und Fertigungsaufwand darstellt. Dazu ist die Anordnung der Festräder (13,21,23,29,40) auf der Antriebswelle (An1) für die Gänge 1/RW-2-6-3-4/5.

## Beschreibung

Die Erfindung betrifft ein Dreiwellen-Getriebe gemäß dem Oberbegriff von Patentanspruch 1.

Aus "Hoffmann, Christian, Dreiwellen-Getriebe", veröffentlicht in der "ATZ 12/2002, Seite 1092, Bild 2" ist bereits ein Dreiwellen-Getriebe bekannt. Dieses Dreiwellen-Getriebe weist eine Antriebswelle und zwei Abtriebswellen auf. Die Antriebswelle trägt fünf Festräder, die in axialer Richtung gesehen aufeinander folgend den Gängen 1/RW-2-3-6-4/5 zugeordnet sind. Die erste der beiden Abtriebswellen trägt aus der selben axialen Richtung aufeinander folgend gesehen die Gänge 1-2-3-4. Die zweite Abtriebswelle trägt aus dieser axialen Richtung gesehen aufeinander folgend die Gänge RW-6-5. Ein Zahnrad der Antriebswelle kämmt sowohl mit dem Gangrad des vierten Ganges, als auch mit dem Gangrad des fünften Ganges. Ein solches Dreiwellen-Getriebe baut axial besonders kurz.

Aus der DE 196 24 857 A1 ist ein weiteres axial besonders kurz bauendes Dreiwellen-Getriebe bekannt. Kern dieser Druckschrift ist ebenso, wie bei der DE 195 24 233 C2, die Anordnung des vierten und des sechsten Ganges in einer Räderebene. Bei dem Dreiwellen-Getriebe gemäß DE 196 24 857 A1 trägt die Antriebswelle fünf Festräder, die in axialer Richtung gesehen aufeinander folgend den Gängen 1/RW-2-5-3-4/6 zugeordnet sind. Die erste der beiden Abtriebswellen trägt aus einer axialen Richtung aufeinander folgend gesehen die Gänge 1-2-3-4. Die zweite Abtriebswelle trägt aus der selben axialen Richtung gesehen aufeinander folgend die Gänge RW-5-6.

In "Hoffmann, Christian, Dreiwellen-Getriebe, ATZ 12/2002, Seite 1096, Bild 5" wird ferner das Dreiwellen-Getriebe des Mini Cooper S vorgestellt. Ein Gehäusedeckel, welcher die Lageraugen der drei Wellen abdichtet, ist dabei als Gussteil ausgeführt, welches dichtend an O-Ringen im Bereich der Lageraugen anliegt.

Aufgabe der Erfindung ist es, ein gattungsgemäßes Getriebe zu schaffen, welches kostengünstig zu fertigen ist und in sämtlichen Dimensionen - d.h auch quer zu besagter axialer Richtung - klein baut.

Diese Aufgabe wird erfindungsgemäß durch die Merkmale von Patentanspruch 1 gelöst.

Die gattungsgemäße Anordnung der Losräder
- der Gänge 1 bis 4 auf der ersten Abtriebswelle und
- der Gänge 5, 6 und des Rückwärtsganges RW auf der zweiten Abtriebswelle
ist generell von Vorteil, da somit die Belastungen, welche sich aus hoher Laufzeit und hohem Drehmoment zusammensetzten, gleichmäßig auf beide Abtriebswellen verteilen. Auf der ersten Abtriebswelle hat das Losrad des ersten Ganges ein hohes Drehmoment zu übertragen, während die Laufzeit jedoch nur gering ist. Die Gänge 2 bis 4 haben ein mittleres Drehmoment bei mittleren Laufzeiten zu übertragen. Auf der zweiten Abtriebswelle sind die Losräder des 5. und des 6. Ganges angeordnet, welche bei einer hohen Laufzeit ein geringes Drehmoment übertagen. Der Rückwärtsgang RW überträgt bei geringen Laufzeiten ein hohes Drehmoment.

Die aufeinanderfolgende Anordnung der Festräder 1/RW-2-6-3-4/5 auf der Antriebswelle bewirkt in Kombination mit der 1-2-3-4-Anordung und der RW-6-5-Anordnung auf den Abtriebswellen mehrere vorteilhafte Effekte.

Das größte Festrad der Antriebswelle gibt den minimalen Achsabstand zwischen der Antriebswelle und der zweiten Abtriebswelle vor. Dieses größte Festrad ist das Festrad des 6. Ganges, welches erfindungsgemäß ausschließlich mit einem Losrad der zweiten Abtriebswelle kämmt. Damit muss sich kein Losrad auf der ersten Abtriebswelle an diesem großen Durchmesser orientieren und es gibt entsprechend keine negativen Auswirkungen in Form eines großen Achsabstandes zwischen Antriebswelle und der ersten Abtriebswelle. Demzufolge baut das Getriebe quer zur Axialrichtung klein. Das größte Festrad ist in vorteilhafter Weise axial zwischen den Losrädern des 2. und des 3. Ganges angeordnet und ragt radial in deren Axialzwischenraum hinein, was weiterhin vorteilhaften Einfluß auf die Baugröße hat. Dabei kann in besonders vorteilhafter Weise axial zwischen diesen beiden Losrädern des zweiten und des dritten Ganges eine Distanzscheibe angeordnet sein. In besonders vorteilhafter Weise kämmt ein axial am Ende angeordnetes Festrad mit dem Losrad des vierten und des fünften Ganges. Diese beiden Gänge sind unmittelbar benachbart und weisen ein sehr nahe beieinander liegendes Übersetzungsverhältnis auf. Demzufolge können die beiden Abtriebswellen fast den gleichen Achsabstand zur Antriebswelle aufweisen, der zweckmäßigerweise besonders klein gewählt wird, so dass das Getriebe quer zur Axialrichtung klein baut.

Infolge der erfindungsgemäßen 6-3-4/5-Anordnung ragt das Festrad des 3. Ganges in den Axialzwischenraum zwischen dem Losrad des 6. Ganges und dem Losrad des 5. Ganges. Damit wird der Axialabstand zwischen dem 5. Gang und dem 6. Gang relativ groß, wodurch der Axialabstand zwischen den übrigen Gängen in vorteilhafter Weise sehr klein ausgeführt werden kann. Den großen Axialzwischenraum zwischen der Räderebene des 6. und des 5. Ganges teilen sich auf der ersten Abtriebswelle die Schaltmuffe für die Losräder des 3. und des 4. Ganges. Auf der Antriebswelle ist in diesem Axialzwischenraum lediglich das Festrad des 3. Ganges angeordnet. Dadurch, dass dieses Festrad des 3. Ganges axial sehr nahe am Festrad des 6. Ganges angeordnet ist, kann der Achsabstand der Antriebswelle sehr kurz zum Achsabstand der zweite Abtriebswelle gewählt werden, ohne dass die Schaltmuffe zwischen den Losrädern des 6. und des 5. Ganges mit diesem Festrad des 3. Ganges kollidiert. Um dieses Festrad des 3. Ganges axial möglichst weit entfernt von der Schaltmuffe des 6. und des 5. Ganges zu bauen bzw. um dieses Festrad des 3. Ganges möglichst nahe am Festrad des 6. Ganges zu bauen, ohne dass dies auf Kosten der Schrumpfverbindungsbaulänge zwischen einem der beiden Festräder und der Antriebswelle geht, kann eine Ausgestaltung gemäß Patentanspruch 3 vorgesehen sein. Gemäß Patentanspruch 3 ragt das Festrad des 3. Ganges topfförmig über den radial inneren Balken eines Doppel-T-förmigen Profils des Festrades des 6. Ganges.

Der große Axialzwischenraum zwischen dem Losrad des 6. und des 5. Ganges wird genutzt um beim Losrad des 6. Ganges einen Axialabstand zwischen einer Laufverzahnung und einer Schaltverzahnung möglichst groß auszugestalten. Damit wird es möglich, die Laufverzahnung des Losrades des 6. Ganges bei dessen Herstellung in einem finalen Bearbeitungsschritt zu schleifen, ohne mit dem Schleifwerkzeug in die Schaltverzahnung zu geraten. Die Notwendigkeit des großen Axialabstandes für die Schleifbearbeitung besteht nur beim 6. Gang, da sich aus dessen Übersetzungsverhältnis ein Durchmesser der Laufverzahnung ergibt, der nur geringfügig größer ist, als der Durchmesser der Schaltverzahnung. Bei den übrigen Gängen weichen die Durchmesser der Laufverzahnung und der Schaltverzahnung so stark voneinander ab, dass keine Gefahr besteht, mit dem Schleifwerkzeug in die Schaltverzahnung zu geraten. Die finale Schleifbearbeitung ist notwendig, um die Lebensdauer der Laufverzahnung zu erhöhen und die Geräuschentwicklung kleinstmöglich zu halten. Dadurch, dass die Schaltverzahnung des Losrades des 6. Ganges infolge des großen Axialabstandes vor dem Schleifwerkzeug für die Laufverzahnung geschützt ist, kann der Durchmesser des Losrades des 6. Ganges so klein gemacht werden, wie es die übrigen geometrischen Verhältnisse hergeben, so dass der Achsabstand zwischen der zweiten Abtriebswelle und der Antriebswelle sehr klein gewählt werden kann.

Grundsätzlich lässt sich der Stahl zur Herstellung des Losrades im ungehärteten Zustand wesentlich besser schweißen, als im gehärteten Zustand. Geschliffen werden muss das Losrad jedoch im gehärteten Zustand. Durch die große axiale Länge des Losrades des 6. Ganges stehen somit drei vorteilhafte Möglichkeiten zur Herstellung des Losrades mit Schaltverzahnung und Laufverzahnung zur Verfügung.

Als erste Möglichkeit kann eine Hülse verwendet werden, welche die Schaltverzahnung trägt und über eine axialen Baurraum beanspruchende Keilwellenverzahnung mit einem Ring verbunden ist, welcher die Laufverzahnung des 6. Ganges trägt. Die Bearbeitung des Ringes und der Hülse kann in diesem Fall getrennt voneinander erfolgen.

Als zweite Möglichkeit können ein Schaltverzahnungsring und ein Lauferzahnungsring separat hergestellt und im ungehärteten Zustand miteinander verschweißt werden. Im Anschluss kann das zusammengeschweißte Losrad erst gehärtet werden und infolge des großen Axialabstandes dann die Laufverzahnung geschliffen werden.

Als dritte Möglichkeit können die Schaltverzahnung und die Laufverzahnung an einem einteiligen Losrad angeordnet sein.

Patentanspruch 6 zeigt eine besonders vorteilhafte Ausgestaltung der Lagerung des Dreiwellen-Getriebes, welche unter Verwendung kostengünstiger Kegelrollenlager für die Abtriebswellen Wärmedehnungsprobleme der Antriebswelle vermeidet, indem diese Antriebswelle einerseits festgelagert und andererseits losgelagert ist.

Weitere Vorteile der Erfindung gehen aus den weiteren Patentansprüchen, der Beschreibung und der Zeichnung vor.

Die Erfindung ist nachfolgend anhand eines Ausführungsbeispiels in zwei Figuren erläutert.

Dabei zeigen:
- Fig. 1: das Dreiwellen-Getriebe in einer geschnittenen Darstellungen, wobei der Schnitt durch mehrere Ebenen verläuft, so dass sämtliche Schaltgabeln der Schaltschienen ersichtlich sind und
- Fig. 2: das Dreiwellen-Getriebe aus Fig. 1 in einer anderen geschnittenen Darstellungen, wobei der Schnitt durch mehrere Ebenen verläuft, so dass ein Achsdifferential und der Kraftfluß sämtlicher möglichen Gänge ersichtlich ist.

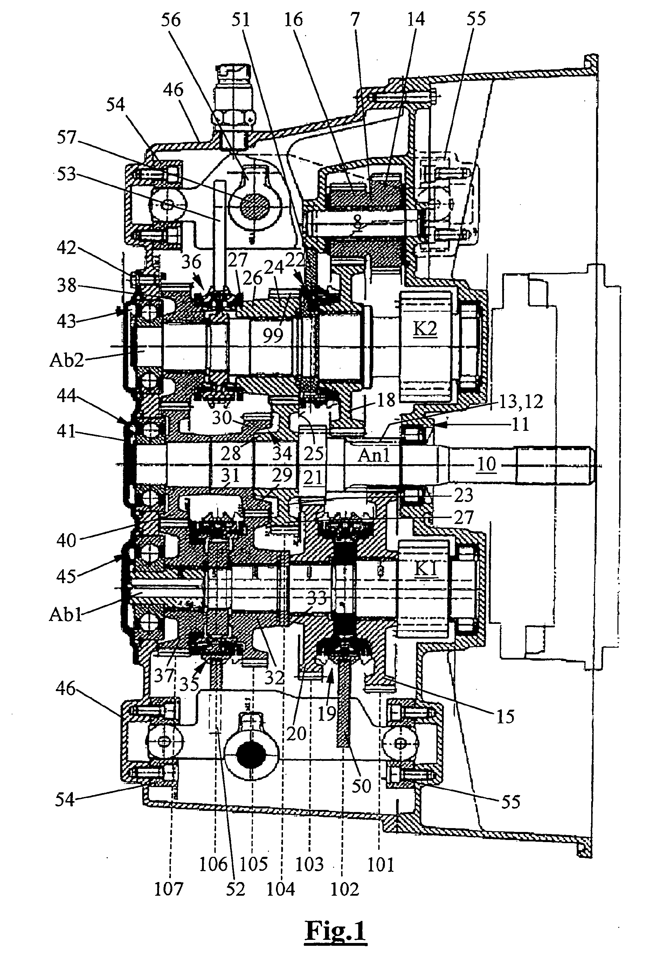

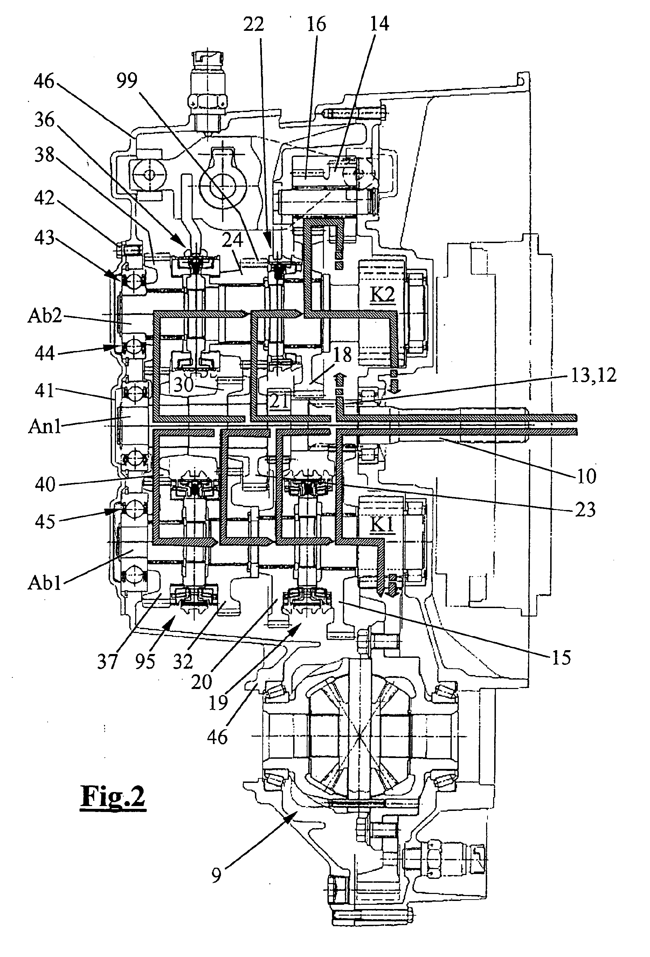

Fig. 1 zeigt ein Dreiwellen-Getriebe. Dieses Dreiwellen-Getriebe ist einem Front-Quer-Antriebsstrang zugehörig. Die Achsen
- einer Antriebswelle An1,
- einer ersten Abtriebswelle Ab1,
- einer zweiten Abtriebswelle Ab2,
- einer Zwischenwelle 7, welche drehbar koaxial auf einem Lagerbolzens 8 gelagert ist und
- eines in Fig. 2 ersichtlichen Achsdifferentials 9 sind dabei räumlich angeordnet, wie dies für Dreiwellen-Getriebe prinzipiell üblich ist und in der "ATZ 12/2002, Seite 1091, Bild 1" erläutert ist.

An einem aus einem Getriebegehäuse 46 herausragenden Ende 10 der Antriebswelle An1 ist ein nicht näher dargestellter Antriebsmotor drehfest angeflanscht. Entsprechend der zeichnerischen Darstellung wird im folgenden die diesem Ende 10 zugehörige Seite als "rechts" bzw. die axial zu diesem Ende weisende Richtung als "rechts" bezeichnet. Die entgegengesetzte Richtung wird als "links" bezeichnet. Im folgenden wird das Dreiwellen-Getriebe von rechts nach links beschrieben.

Die Antriebswelle An1 ist in dem Bereich, in dem diese in das Getriebegehäuse 46 eintritt, mittels eines Zylinderrollenlagers 11 axial losgelagert. An dem linken Ende ist die Antriebswelle An1 mittels eines Rillenkugellagers 44 axial festgelagert. Die Antriebswelle An1 weist mehrere Absätze auf. Ein erster Absatz ist als Laufverzahnung 12 ausgeführt, die unmittelbar in die Antriebswelle An1 eingearbeitet ist und sich mit deren rechter Stirnseite am Lagerinnenring des Zylinderrollenlager 11 axial abstützt. Diese Laufverzahnung 12 bildet das dem 1. Gang und dem Rückwärtsgang RW zugeordnete Festrad 13 der Antriebswelle An1.

Dieses Festrad 13 kämmt in einer ersten Räderebene 101 einerseits mit einem großen Zahnrad 14, welches einstückig mit der Zwischenwelle 7 ausgebildet ist. Andererseits kämmt das Festrad 13 mit einem Losrad 15, welches drehbar auf der ersten Abtriebswelle Ab1 angeordnet ist.

Axial links schließt sich dieser ersten Räderebene 101 eine zweite Räderebene 102 an, in welcher ein ebenfalls einstückig mit der Zwischenwelle 7 ausgebildetes kleines Zahnrad 16 angeordnet ist. Dieses kleine Zahnrad 16 kämmt mit einem Losrad 18, welches drehbar auf der zweiten Abtriebswelle Ab2 angeordnet ist. In dieser zweiten Räderebene 102 ist ferner eine erste Schaltmuffe 19 koaxial auf der ersten Abtriebswelle Ab1 angeordnet. Dieser ersten Schaltmuffe 19 ist axial zwischen dem Losrad 15 und einem weiteren Losrad 20 einer dritten Räderebene 103 angeordnet, so dass sowohl das Losrad 15 als auch alternativ das Losrad 20 mittels der Schaltmuffe 19 drehfest mit der ersten Abtriebswelle Ab1 koppelbar ist.

Das Losrad 20 kämmt mit einem Festrad 21, welches als Zahnkranz drehfest auf die Antriebswelle An1 aufgeschrumpft ist. Das Losrad 20 und das Festrad 21 bilden die Zahnradpaarung des 2. Ganges. In der dritten Räderebene 103 liegt ferner eine Schaltmuffe 22 koaxial zur zweiten Abtriebswelle Ab2. Diese Schaltmuffe 22 weist neben der in der Zeichnung dargestellten Neutralstellung nur noch eine Rückwärtsgangstellung auf, in der die Schaltmuffe 22 zum Einlegen des Rückwärtsganges eine drehfeste Verbindung der zweiten Abtriebswelle Ab2 mit dem Losrad 18 herstellt.

In einer vierten Räderebene 104 liegt die Zahnradpaarung des 6. Ganges. Diese vierte Räderebene 104 umfaßt ein Festrad 23, welches drehfest auf Antriebswelle An1 angeordnet ist und mit einem Losrad 24 kämmt, welches auf der zweiten Abtriebswelle Ab2 angeordnet ist. Das Losrad 24 ist einteilig mit einem ringförmigen Ansatz 26 ausgestaltet, der sich nach links in eine fünfte Räderebene 105 hinein erstreckt und radial außen eine Schaltverzahnung 27 trägt. Das zugehörige Festrad 23 weist ein Doppel-T-förmiges Profil auf, wobei der radial innere Balken des Doppel-T ein Ring 28 ist, der auf die Antriebswelle An1 drehfest aufgeschrumpft ist. Den oberen Balken des Doppel-T bildet der Zahnkranz 27 des Festrades 23. Während der Zahnkranz 27 und der Ring 28 rechts nahezu bündig in einer Ebene 25 abschließen, die sich quer zu den Achsen erstreckt, ragt der Ring 28 links axial weit über den Zahnkranz 27 hinaus. Der Ring 28 ragt dabei in eine topfförmige nach rechts geöffnete Ausnehmung 34 eines Festrades 30 hinein. Dieses Festrad 30 kämmt mit einem Losrad 32 der ersten Abtriebswelle Ab1. Zwischen diesem Losrad 32 und dem axial rechts daneben angeordneten Losrad 20 der dritten Räderebene ist eine Distanzscheibe 33 in der vierten Räderebene 104 angeordnet. Die Topfwandung der topfförmigen Ausnehmung 34 bildet dabei ein Zahnkranz 29 des Festrades 30. Das Festrad 30 umfasst ferner einen radial inneren Ring 31, welcher auf die Antriebswelle An1 aufgeschrumpft ist und sich vom Zahnkranz 29 nach links in eine sechste Räderebene 106 hinein erstreckt.

Die sechste Räderebene 106 umfaßt ausnahmsweise keine Zahnräder, sondern lediglich den besagten Ring 31 und zwei Schaltmuffen 35, 36. Die erste Schaltmuffe 35 ist axial zwischen dem Losrad 32 und einem Losrad 37 einer siebenten Räderebene 107 derart angeordnet, dass das Losrad 32 oder alternativ das Losrad 37 mit der ersten Abtriebswelle Ab1 drehfest koppelbar ist. Die zweite Schaltmuffe 36 ist koaxial zur zweiten Abtriebswelle Ab2 und axial derart zwischen dem Losrad 24 und einem Losrad 38 der siebenten Räderebene angeordnet, dass die zweite Abtriebswelle Ab2 mit dem Losrad 24 oder alternativ mit dem Losrad 38 koppelbar ist. Zu dieser drehfesten Koppelung ist der besagte ringförmige Ansatz 26 am linken Ende mit der radial außen angeordneten Schaltverzahnung 27 versehen. Eine Laufverzahnung 99 dieses Losrades 24 ist zeitlich vor dem Einbau in das Dreiwellen-Getriebe in einem finalen Herstellungsverfahrensschritt geschliffen, so dass die Laufverzahnung 99 eine entsprechend hohe Oberflächengüte aufweist.

Die beiden Losräder 37, 38 der siebenten Räderebene 107 kämmen mit einem Festrad 40, welches drehfest und koaxial auf der Antriebswelle An1 angeordnet ist.

In jeweils eine der Schaltmuffen 19 bzw. 22 bzw. 35 bzw. 36 greift eine Schaltgabel 50 bzw. 51 bzw. 52 bzw. 53 ein, welche bewegungsfest an ein der jeweiligen Schaltmuffe 19 bzw. 22 bzw. 35 bzw. 36 zugeordneten Schaltschiene geschweißt ist. Diese vier Schaltschienen sind parallel nebeneinander angeordnet und lediglich zum besseren Verständnis der Funktionsweise in der Fig. 1 zweifach dargestellt. Die Schaltschienen sind an deren Enden im Getriebegehäuse 46 rollengelagert, wie dies in der DE 198 32 380 C2 beschrieben ist, deren Inhalt in dieser Patentanmeldung als aufgenommen gelten soll. Für die Rollelagerung sind in den Endbereichen der Schaltschienen Rahmen 54, 55 mit viereckigen Ausnehmungen mit dem Getriebegehäuse 46 von innen verschraubt, so dass sich die Rollen bei Axialverschiebung an den Rahmen 54, 55 abwälzen.

Zur Axialverschiebung der Schaltschienen bzw. der mit diesen gekoppelten Schaltmuffen 19, 22, 35, 36 greift ein Schaltfinger 56 einer Schaltwelle 57 in eine Nut der Schaltschienen. Dieser Schaltfinger 56 ist gemäß DE 44 425 28 C1 ausgeführt, deren Inhalt ebenfalls in dieser Patentanmeldung als aufgenommen gelten soll.

An den rechten Enden der beiden Abtriebswellen Ab1 und Ab2 ist jeweils eine Konstante K1 bzw. K2 koaxial drehfest angeordnet, die jeweils mit einem Tellerrad des Achsdifferentials 9 kämmt. Die Konstante K1 der ersten Abtriebswelle Ab1 ist vom Durchmesser kleiner, als die Konstante K2 der zweiten Abtriebswelle Ab2.

An deren linken Enden sind die beiden Abtriebswellen Ab1 und Ab2 und die Antriebswelle An1 mittels abgedichteten Clean Bearing Rillenkugellagern 43, 44, 45 in Lageraugen des Getriebegehäuses 46 drehbar aufgenommen. Diese Lageraugen, welche als Bohrungen in Verdickungen des Getriebegehäuses 46 ausgeführt sind, sind mittels eines Blechdeckels 41 verschlossen. Dieser Blechdeckel 41 ist mit dem Getriebegehäuse 46 mittels mehrerer Schrauben verschraubt, von denen in der Zeichnung nur die eine Schraube 42 ersichtlich ist.

Im folgenden wird insbesondere anhand der Fig. 2 der Kraftfluss in den einzelnen Gängen beschrieben. In der Fig. 2 ist der Kraftfluss der Gänge, welche über die erste Abtriebswelle Ab1 verlaufen - d.h. der 1. bis 4. Gang - mit einer Schraffierung von rechts oben nach links unten dargestellt. Der Kraftfluss der Gänge, welche über die zweite Abtriebswelle Ab2 verlaufen - d.h. der RW, der 6. und der 5. Gang -, ist hingegen mit einer Schraffierung von links oben nach rechts unten dargestellt.

Zum Einlegen des 1. Ganges wird die Schaltmuffe 19 aus der in Fig. 1 und Fig. 2 dargestellten Neutralstellung heraus nach rechts verschoben. Dadurch verläuft der Kraftfluss über
- die Antriebswelle An1,
- die Laufverzahnung 12 bzw. das Festrad 13,
- das dann drehfest mit der ersten Abtriebswelle Ab1 gekoppelte Losrad 15,
- die erste Konstante K1 und
- das Achsdifferential 9.

Zum Einlegen des 2. Ganges wird die Schaltmuffe 19 aus der in Fig. 1 und Fig. 2 dargestellten Neutralstellung heraus nach links verschoben. Dadurch verläuft der Kraftfluss über
- die Antriebswelle An1,
- das aufgeschrumpfte Festrad 21,
- das dann drehfest mit der ersten Abtriebswelle Ab1 gekoppelte Losrad 20,
- die erste Konstante K1 und
- das Achsdifferential 9.

Zum Einlegen des 3. Ganges wird die Schaltmuffe 35 aus der in Fig. 1 und Fig. 2 dargestellten Neutralstellung heraus nach rechts verschoben. Dadurch verläuft der Kraftfluss über
- die Antriebswelle An1,
- das Festrad 30,
- das dann drehfest mit der ersten Abtriebswelle Ab1 gekoppelte Losrad 32,
- die erste Konstante K1 und
- das Achsdifferential 9.

Zum Einlegen des 4. Ganges wird die Schaltmuffe 35 aus der in Fig. 1 und Fig. 2 dargestellten Neutralstellung heraus nach links verschoben. Dadurch verläuft der Kraftfluss über
- die Antriebswelle An1,
- das Festrad 40,
- das dann drehfest mit der ersten Abtriebswelle Ab1 gekoppelte Losrad 37,
- die erste Konstante K1 und
- das Achsdifferential 9.

Zum Einlegen des 5. Ganges wird die Schaltmuffe 36 aus der in Fig. 1 und Fig. 2 dargestellten Neutralstellung heraus nach links verschoben. Dadurch verläuft der Kraftfluss über
- die Antriebswelle An1,
- das Festrad 40,
- das dann drehfest mit der zweiten Abtriebswelle Ab2 gekoppelte Losrad 38,
- die zweite Konstante K2 und
- das Achsdifferential 9.

Zum Einlegen des 6. Ganges wird die Schaltmuffe 36 aus der in Fig. 1 und Fig. 2 dargestellten Neutralstellung heraus nach rechts verschoben. Dadurch verläuft der Kraftfluss über
- die Antriebswelle An1,
- das Festrad 23,
- das dann drehfest mit der zweiten Abtriebswelle Ab2 gekoppelte Losrad 24,
- die zweite Konstante K2 und
- das Achsdifferential 9.

Zum Einlegen des Rückwärtsganges RW wird die Schaltmuffe 22 aus der in Fig. 1 und Fig. 2 dargestellten Neutralstellung heraus nach rechts verschoben. Dadurch verläuft der Kraftfluss über
- die Antriebswelle An1,
- die Laufverzahnung 12 bzw. das Festräd 13,
- das große Zahnrad 14 und das drehfest mit diesem verbundene kleine Zahnrad 16,
- das dann drehfest mit der zweiten Abtriebswelle Ab2 gekoppelte Losrad 18,
- die zweite Konstante K2 und
- das Achsdifferential 9.

Neben dem besonders hervorgehobenen Losrad des 6. Ganges sind auch die Laufverzahnungen sämtlicher anderen Festräder und Losräder der Gänge geschliffen.

In einer besonders kostengünstigen Ausgestaltungsalternative der Erfindung sind die beiden Abtriebswellen Ab1 und Ab2 mittels angestellter Kegelrollenlager in X-Anordnung im Getriebegehäuse gelagert. Lediglich die Antriebswelle An1, deren Wärmedehnung bei einer angestellten Kegelrollenlagerung zu Problemen führen könnte, ist in dieser Ausgestaltungsalternative in der in Fig. 1 und Fig. 2 dargestellten Weise einerseits mit einem Rillenkugellager und andererseits mit einem Zylinderrollenlager fest-los-gelagert. Dabei ist ausschließlich das Rillenkugellager der Antriebswelle An1 mit einem Blechdeckel verschlossen, indem dieser Blechdeckel mit dem Getriebegehäuse verschraubt ist.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Dreiwellen-Getriebe, bei welchem eine erste Abtriebswelle (Ab1) aus einer axialen Richtung aufeinander folgend die Losräder (15, 20, 32, 37) der Gänge 1-2-3-4 trägt, wohingegen eine zweite Abtriebswelle (Ab2) aus der selben axialen Richtung aufeinander folgend die Losräder (18, 24, 38) der Gänge RW-6-5 trägt, wobei ein Festrad (40) einer Antriebswelle (An1) sowohl mit dem Losrad (37) des 4. Ganges, als auch mit dem Losrad (38) des 5. Ganges kämmt, und wobei Schaltmuffen (36, 22, 35) zwischen den Gängen 6-5, 1-2 und 3-4 angeordnet sind, **dadurch gekennzeichnet,**
**dass** die erste Antriebswelle (An1) aus der einen axialen Richtung gesehen aufeinander folgend die Festräder (13, 21, 23, 29, 40) für die Gänge 1/RW-2-6-3-4/5 trägt.

2. Dreiwellen-Getriebe nach Patentanspruch 1,
**dadurch gekennzeichnet,**
**dass** das Festrad (13) mit dem geringsten Durchmesser eine Laufverzahnung (12) ist, welche sowohl mit einer Zwischenwelle (7) des Rückwärtsganges RW, als auch mit einem Losrad (15) des 1. Ganges kämmt.

3. Dreiwellen-Getriebe nach einem der vorhergehenden Patentansprüche,
**dadurch gekennzeichnet,**
**dass** ein Zahnkranz des Festrades (30) des 3. Ganges axial über den radial inneren Ring (28) des Festrades (23) des 6. Ganges ragt, wobei letzteres Festrad (23) ein Doppel-T-förmiges Profil aufweist.

4. Dreiwellen-Getriebe nach einem der vorhergehenden Patentansprüche,
**dadurch gekennzeichnet,**
**dass** die Oberfläche der Laufverzahnung (99) des Losrades (24) des 6. Ganges geschliffen ist.

5. Dreiwellen-Getriebe nach einem der vorhergehenden Patentansprüche,
**dadurch gekennzeichnet,**
**dass** die beiden Abtriebswellen (Ab1, Ab2) und die Antriebswelle (An1) mittels abgedichteter Rillenkugellager (43, 44, 45) in Lageraugen eines Getriebegehäuses (46) drehbar aufgenommen, wobei diese Lageraugen als Bohrungen in Verdickungen des Getriebegehäuses (46) ausgeführt sind, die mittels eines Blechdeckels (41) verschlossen sind, der mit dem Getriebegehäuse (46) mittels mehrerer Schrauben (42) verschraubt ist.

6. Dreiwellen-Getriebe nach einem der Patentansprüche 1 bis 4,
**dadurch gekennzeichnet,**
**dass** die beiden Abtriebswellen (Ab1, Ab2) mittels angestellter Kegelrollenlager in X-Anordnung drehbar in einem Getriebegehäuse gelagert sind, wohingegen die Antriebswelle (An1) einerseits losgelagert und andererseits mittels eines abgedichteten Rillenkugellagers in einem Lagerauge des Getriebegehäuses drehbar aufgenommen ist, wobei dieses Lagerauge als Bohrungen in einer Verdickungen des Getriebegehäuses ausgeführt ist, wobei diese Bohrung mittels eines Blechdeckels verschlossen ist.
